# EUROPÄISCHE PATENTSCHRIFT

(11) **EP 1 561 505 B1**
(45) Veröffentlichungstag und Bekanntmachung des Hinweises auf die Patenterteilung: **04.04.2007**
(21) Anmeldenummer: 05000680.8
(22) Anmeldetag: 14.01.2005
(51) Int. Cl.: B01D 46/02, B01D 46/42

(54) **Verfahren und Vorrichtung zum Abscheiden von Feststoffen aus einem gasförmigen Medium**
Method and device for separating solids from a gaseous medium
Procédé et dispositif pour la séparation des solides d'un milieu gazeux

(30) Priorität: 09.02.2004 DE 102004006365; 09.02.2004 DE 202004001963 U
(43) Veröffentlichungstag der Anmeldung: 10.08.2005
(73) Patentinhaber: Handte Umwelttechnik GmbH, 78532 Tuttlingen (DE)
(72) Erfinder: Handte, Siegfried, Dipl.-Ing., 78351 Bodman-Ludwigshafen (DE)
(74) Vertreter: Müller, Hans

(56) Entgegenhaltungen:
- DE-A1- 3 022 203
- DE-A1- 4 227 220
- GB-A- 839 618
- GB-A- 2 099 328
- US-A- 4 731 100

## Beschreibung

### TECHNISCHES GEBIET

Die Erfindung betrifft ein Verfahren und eine Vorrichtung, mit der sich mit Hilfe von Trockenfiltern Feststoffe aus einem gasförmigen Medium abscheiden lassen. Solche Feststoffe sind beispielsweise metallische Stäube, wie sie insbesondere bei Laser-Schneidemaschinen und Laser-Schweißmaschinen anfallen.

Bei dem Betrieb solcher Trockenfilter ist die Brandgefahr relativ groß, und zwar auch dann, wenn es sich nicht um ausgesprochen explosive Stäube handelt, wie sie beispielsweise unter die deutsche Explosionsklasse SG 2 fallen. Auch bei Eisenstäuben ist eine Brandgefahr vorhanden, insbesondere dann, wenn zusammen mit solchen Stäuben beispielsweise auf den Laser-Schneide- und Schweißmaschinen verwendete Öle in dem Rohgasstrom mitgerissen werden. Durch die Vermischung solcher Öltröpfchen mit den metallischen Stäuben bildet sich auf den Filtern ein Filterkuchen, der sich selbst entzünden kann oder durch die in der Rohgasleitung mitgeführten Funken entzündet werden kann.

### STAND DER TECHNIK

Es ist aus der EP 1270060 A1 eine Vorrichtung zum Abscheiden von Feststoffen aus einem gasförmigen Medium bekannt, bei der durch Zugabe von inerten Stoffen das Entstehen von explosions-fähigen Staub-Luft-Gemischen verhindert wird. Diese inerten Stoffe werden aus dem Staubbehälter heraus, in den die bei der Abreinigung der Filter abgereinigten Prozess-Stäube gesammelt werden, rückwärts in das Filtergehäuse und gegen die Filter geblasen. Durch die Vermischung der inerten Stoffe mit dem auf der Filteroberfläche sich absetzenden Filterkuchen lässt sich die Gefahr eines Filterbrandes stark reduzieren.

Es ist darüber hinaus auch bekannt, zur Reduzierung der Brandgefahr bei Trockenfiltern solche inerten Stoffe dem Rohgasstrom zuzugeben.

Sofern ein Brand im Trockenfilter auftritt, wird ein solcher mit im Filtergehäuse vorhandenen Löschmittel-Sprüheinrichtungen bekämpft.

### DARSTELLUNG DER ERFINDUNG

Ausgehend von diesem Stand der Technik liegt der Erfindung die Aufgabe zugrunde, die Brandgefahr bei Trockenfiltern der eingangs genannten Art zu vermindern.

Diese Erfindung ist für das erfindungsgemäße Verfahren durch die Merkmale des Anspruchs 1 und für eine erfindungsgemäße Vorrichtung, mit der sich das erfindungsgemäße Verfahren durchführen lässt, durch die Merkmale des Anspruchs 8 gegeben. Sinnvolle Weiterbildungen der Erfindung sind Gegenstand von sich an den Anspruch 1 beziehungsweise 8 anschließenden weiteren Ansprüchen.

Die Erfindung beinhaltet, dass Brandschutzflüssigkeiten nicht erst dann eingesetzt werden, wenn ein Brand bereits ausgebrochen ist, sondern dass der Feinfilter kontinuierlich oder getaktet mit solcher nicht brennbarer Flüssigkeit beaufschlagt wird. Damit soll der Feinfilter selber oder auch der auf ihm sich festsetzende Filterkuchen befeuchtet werden. Trotz dieser Befeuchtung sollen die auf dem Filter sich absetzenden Prozess-Stäube noch rieselfähig bleiben, um das von Zeit zu Zeit erforderliche Abreinigen der Filter nicht unnötig zu erschweren.

Durch die Erhöhung des Feuchtigkeitsgrades der Prozess-Stäube wird die zum Entzünden erforderliche Zündenergie erhöht, wodurch wiederum die Brandgefahr entsprechend vermindert wird.

Das Befeuchten wird durch das Versprühen von feinsten Tröpfchen oder Aerosolen bewirkt. Bei Aerosolen handelt es sich um Gase, die feste oder flüssige Stoffe in feinstverteilter Form enthalten. Das Befeuchten kann auch mittels Dampf (wie insbesondere mittels Wasserdampf) erfolgen. Sofern in dem Dampf noch feinverteilte Flüssigkeitströpfchen wie Wassertröpfchen enthalten sind, wird ein solches Zweiphasensystem-Gemisch auch als Nebel bezeichnet.

Die Befeuchtungseinrichtung wie die insbesondere vorhandene Sprüheinrichtung zum Versprühen der nicht brennbaren Flüssigkeit wie beispielsweise des Wassers kann zumindest eine Düse in der Rohgasleitung beziehungsweise in dem Filtergehäuse aufweisen. Eine solche Düse ist vorzugsweise im Einmündungsbereich der Rohgasleitung in das Filtergehäuse hinein und dort insbesondere noch in der Rohgasleitung vorhanden.

Eine solche Düse kann in Art einer Zweistoffdüse, einer Hochdruckdüse oder einer Dampfdüse ausgebildet sein.

Die nicht brennbare Befeuchtungsflüssigkeit ist vorzugsweise Wasser oder kann solches enthalten.

Es hat sich als sinnvoll herausgestellt, eine Einrichtung zum Regeln des zeitlichen beziehungsweise des mengenmäßigen Einbringens der Befeuchtungsflüssigkeit vorzusehen, um den Befeuchtungsgrad regulieren zu können. Mittels dieser Regel-einrichtung kann die elektrische Leitfähigkeit des Filters beziehungsweise des auf dem Filter vorhandenen Filterkuchens, die Temperatur des Rohgases, die Feuchtigkeit des Rohgases oder auch der Filterwiderstand hinsichtlich seiner Durchlässigkeit jeweils gemessen werden und davon die Zuführung der Befeuchtungsflüssigkeit geregelt und gesteuert werden.

Die Befeuchtungseinrichtung kann zusätzlich auch als Brandlöscheinrichtung ausgebildet sein. In diesem Fall wird die Befeuchtung nicht dosiert, sondern in voller Stärke, das heißt wie beim Bekämpfen eines vorhandenen Brandes eingesetzt.

Weitere Vorteile und Merkmale der Erfindung sind den in den Ansprüchen ferner aufgeführten Merkmalen sowie dem nachstehenden Ausführungsbeispiel zu entnehmen.

### KURZE BESCHREIBUNG DER ZEICHNUNG

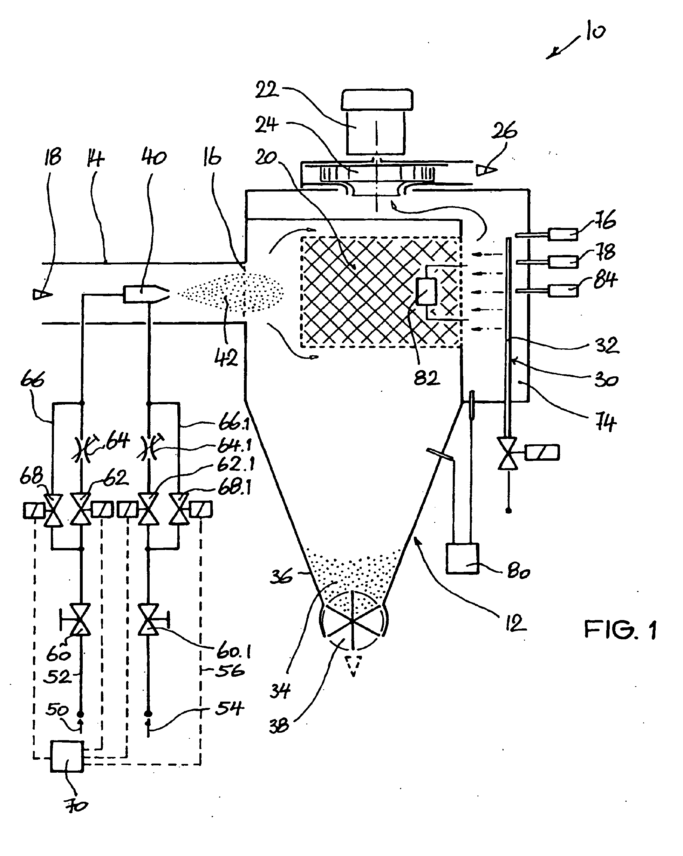

Die Erfindung wird im Folgenden anhand des in der Zeichnung dargestellten Ausführungsbeispiels näher beschrieben und erläutert. Die einzige Figur zeigt als
- Fig. 1: einen schematisierten Querschnittsausschnitt durch eine Vorrichtung nach der Erfindung.

### WEGE ZUM AUSFÜHREN DER ERFINDUNG

Eine Abscheidevorrichtung 10 besitzt ein Filtergehäuse 12, in das eine Rohgasleitung 14 einmündet. Im vorliegenden Fall befindet sich die Mündung 16 der Rohgasleitung 14 an einer Seitenwand des Filtergehäuses 12. Durch die Rohgasleitung 14 wird Rohluft 18, die mit den abzuscheidenden Stäuben beladen ist, den im Filtergehäuse 12 vorhandenen Feinfiltern 20 zugeführt. Die Rohluft 18 kommt im vorliegenden Beispielsfall von einer Laserschneide- oder auch von einer Laserschweißanlage.

Solche sogenannten Trockenfilter können als Patronenfilter, Schlauchfilter, Taschenfilter oder Starrkörperfilter ausgebildet sein.

Die Filter 20 werden von außen nach innen durchströmt. Dabei setzen sich an ihrer Außenfläche die abzuscheidenden Stäube ab. Aus ihrem Inneren wird mittels eines von einem Motor 22 angetriebenen Ventilators 24 das nach Durchströmen der Filter 20 als Reinluft vorhandene gasförmige Medium abgesaugt und als Reinluft 26 aus der Vorrichtung 10 herausgeführt. Mittels einer Abreinigungsvorrichtung 30, die an sich bekannt ist, kann im Gegenstrom Luft stoßweise über eine Reinigungsleitung 32 in das Innere der Feinfilter 20 hineingeleitet und damit die Filter von innen nach außen mit Luft beaufschlagt werden. Durch den dadurch bewirkten Rüttelvorgang werden die Feinfilter von dem außen an ihnen anliegenden Filterkuchen befreit. Dieser Filterkuchen fällt als Prozess-Staub 34 in den sich unten konisch verjüngenden Teil 36 des Filtergehäuses 12, von wo er mittels eines beispielsweise in Form einer Zellenradschleuse 38 ausgebildeten Austragvorrichtung aus dem Filtergehäuse 12 herausgebracht und in bereitstehende Behältnisse hineingefüllt und abtransportiert werden kann.

In der Rohgasleitung 14 ist nahe bei ihrer Mündung 16 eine Zweistoffdüse 40 so positioniert, dass die Filter 20 mit dem aus dieser Düse 40 austretende Medium 42 beaufschlagt werden. Dabei werden auch auf der Außenseite der Feinfilter 20 vorhandene Filterkuchenbestandteile ebenfalls mit dem aus der Düse 40 austretenden Medium 42 beaufschlagt. Dieses Medium 42 ist im vorliegenden Fall Wasser 50, das mittels Druckluft 54 aus der Düse 40 herausgesprüht wird.

Das Wasser 50 wird über eine Leitung 52 und die Druckluft 54 über eine Leitung 56 dieser Zweistoffdüse 40 zugeführt. In der Wasserleitung 52 ist ein Hand-Absperrventil 60 eingebaut, über das die Wasserleitung 52 per Hand - beispielsweise bei Reparatur- oder Montagearbeiten - abgesperrt werden kann. Abströmseitig dieses Absperrventils 60 ist ein elektrisch betätigbares Ventil 62 eingebaut vorhanden, das mit einer Drossel 64 zusammenwirkt, so dass ein sogenanntes Drosselventil vorhanden ist. Die Drossel 64 ist ebenfalls elektrisch verstellbar. Das Ventil 62 ist im vorliegenden Fall zwischen zwei Stellungen verstellbar. In der einen Stellung ist dieses Ventil 62 offen, in der anderen Stellung ist dieses Ventil 62 verschlossen. Über die Drossel 64 wird die über das Ventil 62 bereitgestellte Strömungsmenge in ihrer Menge variabel eingestellt.

Das Drosselventil 62, 64 wird von einer Bypassleitung 66 kurzgeschlossen. In dieser Bypassleitung 66 ist ebenfalls ein elektrisch ansteuerbares Ventil 68 vorhanden, über das diese Bypassleitung 66 vollständig geöffnet beziehungsweise vollständig verschlossen werden kann.

Vergleichbare Ventile 60.1, 62.1, 64.1 sind auch in der Druckluftleitung 56 vorhanden. Diese Ventile 62.1 und 64.1 werden ebenfalls von einer Bypassleitung 66.1 kurzgeschlossen. In dieser Bypassleitung 66.1 ist wiederum ein elektrisch ansteuerbares Ventil 68.1 vorhanden, um diese Bypassleitung 66.1 vollständig zu öffnen oder zu verschließen.

Das Ansteuern der Ventile 62, 64 beziehungsweise 62.1, 64.1 sowie in Abhängigkeit davon der Ventile 68, 68.1 erfolgt über eine Steuer- und Regeleinrichtung 70. Mit Hilfe dieser Steuer- und Regeleinrichtung 70 kann das Zuströmen von Wasser 50 und Druckluft 54 zu der Düse 40 sowohl in zeitlicher als auch in mengenmäßiger Hinsicht variabel eingestellt werden.

Diese zeitliche und/oder mengenmäßige Regulierung mittels der Steuer- und Regeleinrichtung 70 kann für fest eingestellte entsprechende Vorgaben erfolgen. Es ist allerdings auch möglich, zum Betrieb dieser Steuer- und Regeleinrichtung 70 Messgrößen zu verwenden, die im Betrieb der Abscheidevorrichtung 10 ermittelt werden. Diese Messgrößen hängen ab von der Reingastemperatur, die im vorliegenden Fall durch einen Temperaturfühler 76 ermittelt wird, der in der die Abreinigungsvorrichtung 30 enthaltenden Reingaskammer 74 platziert ist. Alternativ oder zusätzlich kann auch über einen in der Reingaskammer 74 vorhandenen Fühler 78 die Gasfeuchtigkeit dieser Reinluft 26 ermittelt werden. Außerdem hängt der Betrieb der Steuer- und Regeleinrichtung 70 im vorliegenden Fall noch von dem jeweils vorhandenen Filter-widerstand ab, der über einen Filterwiderstandmesser 80 ermittelt wird, der die Druckverhältnisse auf der Rohgas- und auf der Reingasseite miteinander vergleicht. Außerdem ist im vorliegenden Fall der Betrieb der Steuer- und Regeleinrichtung 70 auch noch von der elektrischen Leitfähigkeit des auf den Feinfiltern 20 vorhandenen Filterkuchens abhängig, die über eine entsprechende Messeinrichtung 82 ermittelt wird.

Im Reinigungsbetrieb der Abscheidevorrichtung 10 wird im vorliegenden Fall mehr oder weniger kontinuierlich Wasser zusammen mit Druckluft in Form eines Aerosols aus der Zweistoffdüse 40 gegen die Feinfilter 20 geblasen. Sobald die vom Temperaturfühler 76 festgestellte Temperatur einen vorgegebenen Temperaturwert überschreitet oder beim Ansprechen eines ebenfalls auf der Reingasseite, wie insbesondere in der Reingaskammer 74 platzierten Rauchmelders 84 werden die Bypassleitungen 66 und 66.1 vollständig geöffnet und die die Drosselventile 62, 64, 62.1, 64.1 enthaltenden Leitungsabschnitte für das Wasser 50 und für die Druckluft 54 geschlossen. Für eine vorgegebene Zeit wird nun die maximal zur Verfügung stehende Bedüsungsmenge aus der Düse 40 ausgeblasen. Auf diese Weise wird die Düse 40 wie bei einer Brandlöscheinrichtung zum Bekämpfen eines Brandes verwendet.

## Patentansprüche

1. Verfahren zum Abscheiden von Feststoffen (34) aus einem gasförmigen Medium (18),
- bei dem die mit den abzuscheidenden Feststoffen, wie insbesondere den Stäuben, beladene Rohluft (18) durch Feinfilter (20) hindurchströmt, wobei sich die abzuscheidenden Feststoffe (34) als Filterkuchen an den Feinfiltern (20) absetzen, und
- kontinuierlich und/oder getaktet die Feinfilter (20) und/oder der an den Feinfiltern (20) anhaftende Filterkuchen mit einer nicht brennbaren Flüssigkeit befeuchtet werden,
- **dadurch gekennzeichnet, dass**
- als Feinfilter Trockenfilter benutzt werden,
- das Befeuchten der Feinfilter (20) und/oder der an den Feinfiltern (20) anhaftenden Filterkuchen während des Absetzens der abzuscheidenden Feststoffe (34) an den Feinfiltern (20) erfolgt, und zwar derart, dass die auf den Feinfiltern (20) sich absetzenden Feststoffe rieselfähig bleiben.

2. Verfahren nach Anspruch 1,
- **dadurch gekennzeichnet, dass**
- die nicht brennbare Flüssigkeit in Form von feinsten Tröpfchen, Aerosolen, Nebel oder Dampf auf die Feinfilter (20) und/ oder auf die Filterkuchen aufgebracht wird.

3. Verfahren nach Anspruch 1 oder 2,
- **dadurch gekennzeichnet, dass**
- die zeitliche Dauer des Befeuchtens und die Befeuchtungsmenge fest vorgegeben werden.

4. Verfahren nach Anspruch 1 oder 2,
- **dadurch gekennzeichnet, dass**
- die zeitliche Dauer des Befeuchtens und die Befeuchtungsmenge bestimmt wird in Abhängigkeit
-- von der elektrischen Leitfähigkeit des Filtermediums des Feinfilters und/oder des auf dem Filtermedium vorhandenen Filterkuchens, und / oder
-- von der Temperatur des Reingases und/oder
-- von der Feuchtigkeit des Reingases und/oder
-- von dem Filterwiderstand.

5. Verfahren nach einem der vorstehenden Ansprüche,
- **dadurch gekennzeichnet, dass**
- die Befeuchtung aus dem Einmündungsbereich der Rohgasleitung (14) in das Filtergehäuse hinein erfolgt.

6. Verfahren nach einem der vorstehenden Ansprüche,
- **dadurch gekennzeichnet, dass**
- im Brandfall eine maximal mögliche Befeuchtung vorgenommen wird.

7. Verfahren nach einem der vorstehenden Ansprüche,
- **dadurch gekennzeichnet, dass**
- die im Betrieb einer Laser-Schneide- oder Laser-Schweißmaschine anfallenden Stäube befeuchtet werden.

8. Vorrichtung (10) zum Durchführen des Verfahrens nach einem der vorstehenden Ansprüche zum Abscheiden von Feststoffen (34) aus einem gasförmigen Medium (18),
- mit in einem Filtergehäuse (12) vorhandenen Feinfiltern (20),
- mit einer in das Filtergehäuse (12) einmündenden Rohgasleitung (14) und einer aus dem Filtergehäuse (12) herausführenden Reingasleitung,
- mit einer Einrichtung (84) zum Melden eines Brandes im Filtergehäuse,
- mit einer im Brandfall aktivierbaren Einrichtung zum Versprühen einer Löschflüssigkeit, wie insbesondere Löschwasser,
- **dadurch gekennzeichnet, dass**
- eine Einrichtung (70) zum kontinuierlichen und/oder getakteten Befeuchten der Feinfilter (20) und/oder des an den Feinfiltern (20) anhaftenden Filterkuchens mit einer nicht brennbaren Flüssigkeit vorhanden ist, die anströmseitig der Feinfilter (20) vorhanden und zum Versprühen von feinsten Tröpfchen oder Aerosolen ausgebildet ist.

9. Vorrichtung nach Anspruch 8,
- **dadurch gekennzeichnet, dass**
- die Befeuchtungseinrichtung eine Einrichtung zum Erzeugen von Feuchtigkeitsnebel oder Feuchtigkeitsdampf aufweist.

10. Vorrichtung nach Anspruch 8 oder 9,
- **dadurch gekennzeichnet, dass**
- die Befeuchtungseinrichtung zumindest eine Düse (40) in der Rohgasleitung (14) und/oder in dem Filtergehäuse aufweist.

11. Vorrichtung nach Anspruch 10,
- **dadurch gekennzeichnet, dass**
- die Befeuchtungseinrichtung zumindest eine Düse (40) im Einmündungsbereich der Rohgasleitung (14) in das Filtergehäuse hinein aufweist.

12. Vorrichtung nach Anspruch 10 oder 11,
- **dadurch gekennzeichnet, dass**
- zumindest eine solche Düse (40) in der Rohgasleitung (14) vorhanden ist.

13. Vorrichtung nach einem der Ansprüche 10 bis 12,
- **dadurch gekennzeichnet, dass**
- eine solche Düse(40) eine Zweistoffdüse, eine Hochdruckdüse oder eine Dampfdüse ist.

14. Vorrichtung nach einem der Ansprüche 8 bis 13,
- **dadurch gekennzeichnet, dass**
- die nicht brennbare Befeuchtungsflüssigkeit Wasser ist oder Wasser enthält.

15. Vorrichtung nach einem der Ansprüche 8 bis 14,
- **dadurch gekennzeichnet, dass**
- eine Einrichtung (70) zum Regeln des zeitlichen und/oder mengenmäßigen Einbringens der Befeuchtungsflüssigkeit vorhanden ist.

16. Vorrichtung nach Anspruch 15,
- **dadurch gekennzeichnet, dass**
- die Regeleinrichtung (70) enthält:
-- eine Einrichtung (82) zum Messen der elektrischen Leitfähigkeit des Filtermediums des Feinfilters und/oder des auf dem Filtermedium vorhandenen Filterkuchens und/oder
-- eine Einrichtung (76) zum Messen der Temperatur des Reingases und/oder
-- eine Einrichtung (78) zum Messen der Feuchtigkeit des Reingases und/oder
-- eine Einrichtung (80) zum Messen des Filterwiderstandes.

17. Vorrichtung nach einem der Ansprüche 8 bis 16,
- **dadurch gekennzeichnet, dass**
- die Regeleinrichtung (70) an einen Rauchmelder (84) angeschlossen ist, der insbesondere in der Reingaskammer (74) vorhanden ist.

18. Vorrichtung nach einem der Ansprüche 8 bis 17,
- **dadurch gekennzeichnet, dass**
- die Befeuchtungseinrichtung so ansteuerbar ist, dass sie als Brandlöscheinrichtung vorhanden ist.

19. Vorrichtung nach einem der Ansprüche 8 bis 18,
- **dadurch gekennzeichnet, dass**
- sie zum Absaugen der auf Laser-Schneide- oder Laserschweißmaschinen anfallenden Stäube ausgebildet ist.

## Claims

1. Method for the separation of solids (34) out of a gaseous medium (18),
- in which the solids to be separated, such as, in particular, untreated air (18) laden with dusts, flow through fine filters (20), the solids (34) to be separated settling as filter cake on the fine filters (20), and
- the fine filters (20) and/or the filter cake adhering to the fine filters (20) are moistened with an incombustible liquid continuously and/or intermittently,
- **characterized in that**
- the fine filters used are dry filters,
- the moistening of the fine filters (20) and/or of the filter cake adhering to the fine filters (20) takes place during the settling on the fine filters (20) of the solids (34) to be separated, specifically in such a way that the solids settling on the fine filters (20) remain pourable.

2. Method according to Claim 1,
- **characterized in that**
- the incombustible liquid is applied in the form of very fine droplets, aerosols, mist or vapour to the fine filters (20) and/or to the filter cakes.

3. Method according to Claim 1 or 2,
- **characterized in that**
- the time duration of the moistening and the moistening quantity are permanently predetermined.

4. Method according to Claim 1 or 2,
- **characterized in that**
- the time duration of the moistening and moistening quantity are determined as a function
- of the electrical conductivity of the filter medium of the fine filter and/or of the filter cake present on the filter medium
and/or
- of the temperature of the pure gas and/or
- of the moisture of the pure gas and/or
- of the filter resistance.

5. Method according to one of the preceding claims,
- **characterized in that**
- the moistening takes place out of the region of issue of the untreated-gas line (14) into the filter housing.

6. Method according to one of the preceding claims,
- **characterized in that**
- maximum possible moistening is carried out in the event of fire.

7. Method according to one of the preceding claims,
- **characterized in that**
- the dusts occurring during the operation of a laser-cutting or laser-welding machine are moistened.

8. Apparatus (10) for carrying out the method according to one of the preceding claims for the separation of solids (34) out of a gaseous medium (18),
- with fine filters (20) present in a filter housing (12),
- with an untreated-gas line (14) issuing into the filter housing (12) and a pure-gas line leading out of the filter housing (12),
- with a device (84) for indicating a fire in the filter housing,
- with a device, activatable in the event of a fire, for spraying an extinguishing liquid, such as, in particular, extinguishing water,
- **characterized in that**
- a device (70) for the continuous and/or intermittent moistening of the fine filters (20) and/or of the filter cake adhering to the fine filters (20) with an incombustible liquid is present, which is present on the inflow side of the fine filters (20) and is designed for spraying very fine droplets or aerosols.

9. Apparatus according to Claim 8,
- **characterized in that**
- the moistening device has a device for generating a moisture mist or moisture vapour.

10. Apparatus according to Claim 8 or 9,
- **characterized in that**
- the moistening device has at least one nozzle (40) in the untreated-gas line (14) and/or in the filter housing.

11. Apparatus according to Claim 10,
- **characterized in that**
- the moistening device has at least one nozzle (40) in the region of issue of the untreated-gas line (14) into the filter housing.

12. Apparatus according to Claim 10 or 11,
- **characterized in that**
- at least one such nozzle (40) is present in the untreated-gas line (14).

13. Apparatus according to one of Claims 10 to 12,
- **characterized in that**
- such a nozzle (40) is a two-component nozzle, a high-pressure nozzle or a vapour nozzle.

14. Apparatus according to one of Claims 8 to 13,
- **characterized in that**
- the incombustible moistening liquid is water or contains water.

15. Apparatus according to one of Claims 8 to 14,
- **characterized in that**
- a device (70) for regulating the time-related and/or quantity-related introduction of the moistening liquid is present.

16. Apparatus according to Claim 15,
- **characterized in that**
- the regulating device (70) contains:
- a device (82) for measuring the electrical conductivity of the filter medium of the fine filter and/or of the filter cake present on the filter medium and/or
- a device (76) for measuring the temperature of the pure gas and/or
- a device (78) for measuring the moisture of the pure gas and/or
- a device (80) for measuring the filter resistance.

17. Apparatus according to one of Claims 8 to 16,
- **characterized in that**
- the regulating device (70) is connected to a smoke alarm (84) which is present particularly in the pure-gas chamber (74).

18. Apparatus according to one of Claims 8 to 17,
- **characterized in that**
- the moistening device can be activated such that it is present as a fire-extinguishing device.

19. Apparatus according to one of Claims 8 to 18,
- **characterized in that**
- it is designed for sucking away the dusts occurring on laser-cutting or laser-welding machines.

## Revendications

1. Procédé pour séparer des matières solides (34) d'un milieu gazeux (18),
- selon lequel l'air impur (18) chargé des matières solides à séparer, comme notamment des poussières, s'écoule à travers des filtres fins (20), les matières solides (34) à séparer se déposant sous forme de gâteau de filtre sur les filtres fins (20), et
- les filtres fins (20) et/ou le gâteau de filtre adhérant sur les filtres fins (20) sont mouillés en continu et/ou de manière cyclique avec un liquide ininflammable,
**caractérisé en ce que**
- on utilise comme filtres fins des filtres à sec,
- le mouillage des filtres fins (20) et/ou du gâteau de filtre adhérant sur les filtres fins (20) s'effectue pendant la dépose des matières solides (34) à séparer sur les filtres fins (20), et ce de telle sorte que les matières solides qui se déposent sur les filtres fins (20) demeurent aptes à l'écoulement.

2. Procédé selon la revendication 1, **caractérisé en ce que** le liquide ininflammable est appliqué sur les filtres fins (20) et/ou sur le gâteau de filtre sous la forme de fines gouttelettes, d'aérosols, de brouillard ou de vapeur.

3. Procédé selon la revendication 1 ou 2, **caractérisé en ce que** la durée du mouillage et la dose de mouillage sont fixement prédéfinies.

4. Procédé selon la revendication 1 ou 2, **caractérisé en ce que** la durée du mouillage et la dose de mouillage sont déterminées en fonction
- de la conductivité de l'agent filtrant du filtre fin et/ou du gâteau de filtre présent sur l'agent filtrant, et/ou
- de la température du gaz purifié et/ou
- de l'humidité du gaz purifié et/ou
- de la résistance du filtre.

5. Procédé selon l'une des revendications précédentes, **caractérisé en ce que** le mouillage s'effectue à partir de la région d'embouchure de la conduite (14) de gaz impur dans le boîtier de filtre.

6. Procédé selon l'une des revendications précédentes, **caractérisé en ce qu'**on effectue en cas d'incendie un mouillage maximal possible.

7. Procédé selon l'une des revendications précédentes, **caractérisé en ce qu'**on mouille les poussières apparaissant pendant l'exploitation d'une machine de découpage ou de soudage au laser.

8. Dispositif (10) pour la mise en oeuvre du procédé selon l'une des revendications précédentes pour séparer des matières solides (34) d'un milieu gazeux (18),
- avec des filtres fins (20) présents dans un boîtier de filtre (12),
- avec une conduite (14) de gaz impur débouchant dans le boîtier de filtre (12) et une conduite de gaz purifié sortant du boîtier de filtre (12),
- avec un équipement (84) pour signaler un incendie dans le boîtier de filtre,
- avec un équipement pouvant être activé en cas d'incendie pour pulvériser un liquide extincteur, comme notamment de l'eau d'extinction,
**caractérisé en ce que**
- un équipement (70) est présent pour mouiller en continu et/ou de manière cyclique les filtres fins (20) et/ou le gâteau de filtre adhérant sur les filtres fins (20) avec un liquide ininflammable, équipement qui est présent du côté du flux entrant des filtres fins (20) et qui est conçu pour pulvériser des fines gouttelettes ou des aérosols.

9. Dispositif selon la revendication 8, **caractérisé en ce que** l'équipement de mouillage présente un équipement pour produire un brouillard humide ou de la vapeur humide.

10. Dispositif selon la revendication 8 ou 9, **caractérisé en ce que** l'équipement de mouillage présente au moins une buse (40) dans la conduite (14) de gaz impur et/ou dans le boîtier de filtre.

11. Dispositif selon la revendication 10, **caractérisé en ce que** l'équipement de mouillage présente au moins une buse (40) dans la région d'embouchure de la conduite (14) de gaz impur dans le boîtier de filtre.

12. Dispositif selon la revendication 10 ou 11, **caractérisé en ce qu'**au moins une telle buse (40) est présente dans la conduite (14) de gaz impur.

13. Dispositif selon l'une des revendications 10 à 12, **caractérisé en ce qu'**une telle buse (40) est une buse à deux substances, une buse à haute pression ou une buse de vapeur.

14. Dispositif selon l'une des revendications 8 à 13, **caractérisé en ce que** le liquide de mouillage ininflammable est de l'eau ou contient de l'eau.

15. Dispositif selon l'une des revendications 8 à 14, **caractérisé en ce qu'**un équipement (70) est présent pour réguler la durée et/ou la dose d'apport de liquide de mouillage.

16. Dispositif selon la revendication 15, **caractérisé en ce que** l'équipement de régulation (70) contient :
- un équipement (82) pour mesurer la conductivité de l'agent filtrant du filtre fin et/ou du gâteau de filtre présent sur l'agent filtrant, et/ou
- un équipement (76) pour mesurer la température du gaz purifié et/ou
- un équipement (78) pour mesurer l'humidité du gaz purifié et/ou
- un équipement (80) pour mesurer la résistance du filtre.

17. Dispositif selon l'une des revendications 8 à 16, **caractérisé en ce que** l'équipement de régulation (70) est raccordé à un détecteur de fumée (84) qui est notamment présent dans la chambre (74) de gaz purifié.

18. Dispositif selon l'une des revendications 8 à 17, **caractérisé en ce que** l'équipement de mouillage peut être asservi de façon à être présent en tant qu'équipement d'extinction d'incendie.

19. Dispositif selon l'une des revendications 8 à 18, **caractérisé en ce qu'**il est conçu pour évacuer par aspiration les poussières apparaissant sur des machines de découpage ou de soudage au laser.
